# EUROPEAN PATENT APPLICATION

(11) **EP 2 394 540 A1**
(43) Date of publication of application: **14.12.2011**
(21) Application number: 11169356.0
(22) Date of filing: 09.06.2011
(51) Int. Cl.: A47J 31/36

(54) **Infusion group**

(30) Priority: 11.06.2010 IT BS20100106
(71) Applicant: Capitani S.r.l., 22070 Solbiate (CO) (IT)
(72) Inventor: Capitani, Gionata, I-22070 Albiolo, Como (IT)
(74) Representative: Chimini, Francesco

(57) **Abstract**

The present invention relates to an infusion group (1), for example for coffee machines of the type functioning with pods or capsules (25) containing aromatic essences, comprising a frame (2) supporting a female infusor (3) and a male infusor (5), where said female infusor defines an infusion chamber (4) suitable to house a pod or capsule (25) for the production of an infused drink. At least one of said male (5) and female (3) infusors is mobile in relation to the other at least between a capsule loading position, wherein said male and female infusors are reciprocally distanced, and an infusion position, wherein said male and female infusors are alongside each other to close the infusion chamber. In the capsule loading position at least one of said male or female infusors is inclined and distanced in relation to the other in such a way that said infusors jointly form a housing seat (10) of a new capsule or pod (25).

## Description

The present invention relates to an infusion group for example for coffee machines, of the type functioning with pods or capsules containing aromatic essences.

Numerous infusion groups for coffee machines are known of in the art. Such devices usually comprise a male infusor, which supplies an extraction fluid, and a female infusor.

The capsule or pod, containing the aromatic essence, is transported inside the female infusor, to the so-called infusion chamber so that the extraction of the aromatic essence takes place by means of the male infusor.

To such purpose, the devices of the prior art comprise means of receiving and moving the pod which permit its correct receipt, alignment, insertion in the infusion chamber and allow its expulsion from the infusion chamber when dispensing of the drink is completed.

In the prior solutions, such means comprise for example a capsule holder carriage defining a housing seat of a capsule. The carriage is then pushed, for example by the mobile infusor itself, up to the infusion chamber for the insertion of the capsule or pod in said chamber. To perform this operation, suitable means must be provided to enable the movement of the carriage from the insertion trajectory of the capsule in the infusion chamber by the mobile infusor, and means suitable to permit the return of the carriage to a rearward, starting position.

Such mechanisms, often made from plastic elements, must be carefully calibrated to function correctly and given that they are also a small size and normally made of plastic material, do not have a particularly solid structure.

Especially following prolonged use of the infusion machine, for example on account of the presence of residues of the soluble substances, these mechanisms for receiving and moving the capsule or pod are therefore subject to jamming or even breaking.

The purpose of the present invention is to propose an infusion group which is more reliable as well as more advantageous and economical to produce and assemble.

Such purpose is achieved by an infusion group according to claim 1.

The dependent claims describe particularly advantageous embodiments of the infusion group.

Preferred embodiments of the infusion group according to the present invention will be described below in detail with the help of the attached drawings, wherein:

- figure 1 shows a perspective view of the infusion group according to the invention, during the loading phase of a capsule;

- figure 2 shows the infusion group in figure 1, with a capsule inserted;

- figure 2a is an enlarged side view of a front part of the infusion group in figure 2;

- figure 3 shows the infusion group during the closure phase of the infusion chamber;

- figure 3a is an enlarged side view of a front part of the infusion group in figure 3;and

- figure 4 shows the infusion group during the expulsion phase of the capsule.

With reference to such drawings, reference numeral 1 globally denotes an infusion group, for example for coffee machines of the type functioning with pods or capsules 25 containing aromatic essences.

The infusion group 1 comprises a female infusor 3 which defines an infusion chamber 4 suitable to house a capsule 25 for the production of an infused drink, and a male infusor 5, suitable to co-operate with the female infusor 3 to close said chamber 4. The female infusor and male infusor are supported by a frame 2. For example, said frame 2 has a parallelepiped box-structure which extends mainly along a main longitudinal axis X, which for simplicity's sake may be assumed to be horizontal.

The frame 2 comprises two lateral plates 16 opposite each other and parallel to the main axis X. The male infusor 5 and the female infusor 3 are placed between and supported by said lateral plates 16.

According to one embodiment, the frame 2 has a loading aperture 17 of the capsule and an expulsion aperture 20 of the exhausted capsule from the infusion chamber 4, for example towards a collector of used pods provided under the infusion group 1.

At least one of said male 5 and female 3 infusors is mobile in relation to the other at least between a capsule loading position, in which said male and female infusors are reciprocally distanced, and an infusion position, wherein said male and female infusors are alongside each other to close the infusion chamber 4.

According to a preferred embodiment, the male infusor 5 is the mobile infusor while the female infusor 3 is fixed.

Innovatively, in the capsule loading position at least one of said male 3 or female 5 infusors is inclined and distanced in relation to the other in such a way that said infusors jointly form a housing seat 10 of a new capsule or pod 25.

Consequently, said housing seat 10 is formed of the front surface 5' of the male infusor 5 and by a portion of the rim 4' delimiting the infusion chamber 4 of the female infusor 3.

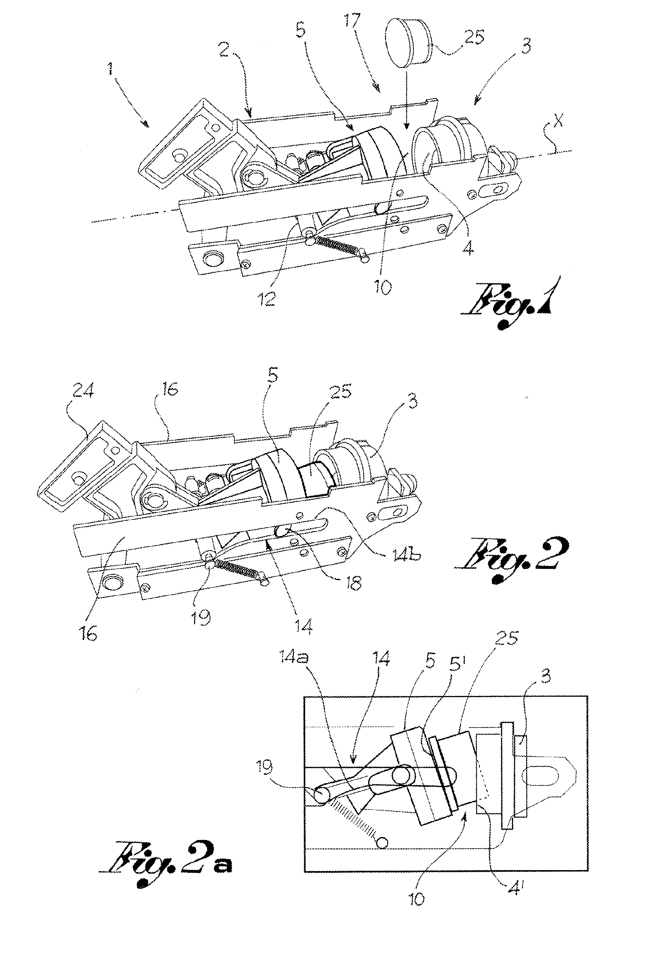

In other words, in the capsule loading position, shown in figures 1, 2 and 2a,at least one out of the male 5 and female 3 infusors is inclined and distanced in relation to the other so as to define between them a V-shaped space 10, in other words wider towards the loading aperture 17 of a capsule and narrower on the opposite side, that is towards the expulsion aperture 20. The distance between the two infusors on the side facing the capsule loading aperture is greater than the thickness of the capsule, so as to enable a capsule 25 coming from the aperture 17, for example from above, to insert itself between the two infusors; the distance between the two infusors towards the capsule expulsion side rather, is smaller than the thickness of said capsule so as to prevent it from slipping towards the exhausted capsule collection container for example downwards. As a result, the capsule 25 remains blocked between the two infusors.

According to a preferred embodiment, at least the male infusor 5 is inclined in relation to the longitudinal axis of the frame 10.

In particular, the loading aperture 17 is positioned in relation to the infusors, when in a capsule loading position, so that a capsule 25 coming from the loading aperture goes into the space 10 between the two infusors, resting and sliding along the front surface 5' of the male infusor 5 and stopping against the rim 4' delimiting the infusion chamber 4 of the female infusor 3. Instead, the capsule 25 is retained only by the infusors 3, 5 themselves.

In the capsule loading position therefore, taking the longitudinal axis X of the frame as reference, the main axis of the male infusor 5 is inclined in relation to said longitudinal axis X of the frame. According to a preferred embodiment rather, the main axis of the female infusor 3 always remains parallel to said longitudinal axis X of the frame.

In a preferred embodiment, the infusor inclined in the capsule loading position, which is preferably the male infusor 5, is the mobile infusor. In the continuation of the description therefore, depending on the context, the male infusor 5 is also defined mobile infusor while the female infusor 3 is also defined fixed infusor.

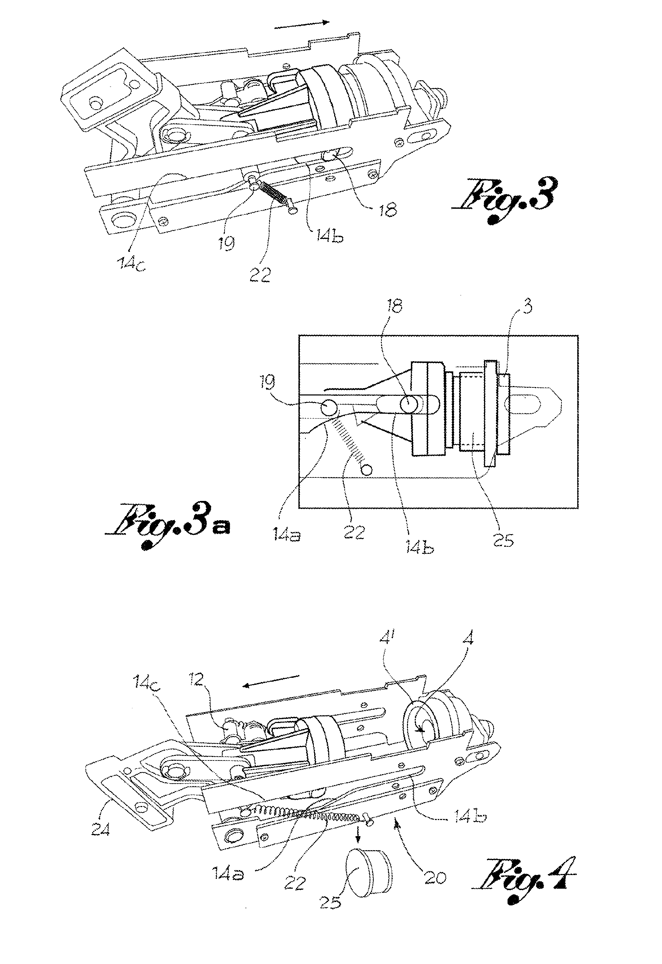

In order to perfect the insertion of the capsule 25 inside the infusion chamber 4 and close said chamber, the mobile infusor 5 must be able to realign with the fixed infusor 3. To such purpose, in a preferred embodiment, the mobile infusor 5 is oscillating around a transversal oscillation axis 12. Thanks to such possibility of oscillation in fact the mobile infusor 5 can change from an inclined capsule loading configuration (figures 1, 2, 2a) to a rectilinear position (figures 3, 3a), that is with its axis parallel to that of the frame, to perform the infusion with the fixed infusor 3.

According to a preferred embodiment, such realignment of the mobile infusor 5 is performed by guide means acting on said infusor during its translation from the capsule loading position to the infusion position.

More in detail, such guide means comprise a guide slot 14 made in each of the lateral plates 16 of the frame. The mobile infusor 5 is provided with guide pins 18, 19 sliding in said slots 14. In particular, the mobile infusor 5 is provided, on each of its sides with a front guide pin 18 and a rear guide pin 19 (where front is taken to mean facing the female infusor 3). Each guide slot 14 comprises an arched section 14a which extends between a rear extremity and front extremity. The front extremity of such arched section 14a is at a greater height than the rear extremity. The arched section 14a continues, on the side facing the fixed infusor 3, with a rectilinear section 14b parallel to the main axis X of the frame. In the capsule loading position, the mobile infusor has the front guide pin 18 engaged by the rectilinear section 14b of the guide slot 14 and the rear pin 19 positioned at the lower or rear extremity of the arched section 14a of said guide slot 14. The two guide pins 18, 19 are therefore at different heights and the mobile infusor 5 is therefore inclined upwards.

Advantageously, the rear pin 19 of the mobile infusor coincides with the oscillation axis 12 of the mobile infusor 5.

Consequently, the mobile infusor translating forwards, in other words towards the fixed infusor, starting from the capsule loading position, there is a translation of the front guide pin 18 along the rectilinear section 14b of the guide slot 14 and a translation and contemporary raising of the rear pin 19 along the arched section 14a of the guide slot 14. The mobile infusor thus straightens automatically following its movement forward.

By virtue of such realignment associated with the forward movement of the mobile infusor, the capsule 25 is retained between the two infusors and it too positions itself in a vertical position until it is completely inserted in the infusion chamber 4 (figures 3, 3a).

According to a preferred embodiment, the mobile infusor 5 is also translatable in a rearward capsule expulsion position away from the infusion position (figure 4). In such expulsion position, the exhausted capsule is free to fall as a result of gravity, or with the help of other detachment systems from the infusion chamber, into the collection container of used capsules through the expulsion aperture 20. The capsule loading position, in which the mobile infusor is next to the fixed infusor, is therefore an intermediate position between the rearward expulsion position, in which the mobile infusor is at the maximum distance from the fixed infusor, and the forward infusion position, in which the two infusors touch.

For example, the guide slot 14 comprises a rectilinear rear section 14c to guide the mobile infusor in its translation from the infusion position to the expulsion position and from this to the intermediate loading position, which coincides with the starting position of an infusion cycle.

In a preferred embodiment, the infusion group 1 comprises return means suitable to bring the mobile infusor 5 back to the initial capsule loading position from the capsule extraction position. For example, said return means comprise a pair of return springs 22, each fixed on one side to a respective lateral plate 16, in an intermediate or forward position of such, and on the other to the rear guide pin 19 of the mobile infusor 5.

Furthermore, the infusion group comprises motorised or manually operable drive means for the forward and backward movement of the mobile infusor 5. In the example shown, said drive means comprise a toggle lever 24 to which the mobile infusor 5 is hinged.

In one embodiment variation, the drive means of the male infusor 5 comprise a cam lever.

Innovatively, the infusion group according to the invention does not require any capsule-holder carriage or other specific means of housing and moving the capsule. The capsule is retained rather by the infusors themselves.

As well as lower production and assembly costs, the structure of the group proves simplified, lighter and therefore more reliable. In particular, the functioning of the group is simpler and safer in that, thanks to the absence of carriages or stops for the capsule, problems of obstruction, jamming, breaking, uncoiling of springs, for example on account of residues of coffee or other soluble substances after repeated infusions, are avoided.

Advantageously, the infusion group to which the present invention relates therefore requires little maintenance thanks to the absence of delicate components which would otherwise require calibration and periodic adjustment.

A person skilled in the art may make modifications, adaptations and replacements of parts with others functionally equivalent to the infusion group described above so as to satisfy contingent requirements, while remaining within the sphere of the following claims. Each of the characteristics described as belonging to a possible embodiment may be realised independently of the other embodiments described.

## Claims

1. Infusion group (1) for example for coffee machines, of the type functioning with pods or capsules (25) containing aromatic essences, comprising a frame (2) supporting a female infusor (3) and a male infusor (5), where said female infusor defines an infusion chamber (4) suitable to house a pod or capsule (25) for the production of an infused drink, where the male infusor (5) is suitable to co-operate with the female infusor (3) to close said chamber (4), and where at least one of said male (5) and female (3) infusors is mobile in relation to the other at least between a capsule loading position, wherein said male and female infusors are reciprocally distanced, and an infusion position, wherein said male and female infusors are alongside each other, **characterised by** the fact that in the capsule loading position at least one of said male and female infusors is inclined in relation to the other in such a way that said infusors jointly form a housing seat (10) of a new capsule or pod (25).

2. Infusion group according to claim 1, wherein said housing seat (10) is formed of the front surface (5') of the male infusor (5) and by a portion of the rim (4') delimiting the infusion chamber (4) of the female infusor.

3. Infusion group according to claim 2, wherein the support frame (2) extends mainly along a longitudinal frame axis (X), and wherein the main axis of the male infusor (5) is inclined in relation to said longitudinal frame axis in the capsule loading position.

4. Infusion group according to any of the previous claims, wherein the infusor inclined in the capsule loading position is the mobile infusor.

5. Infusion group according to claim 4, wherein the mobile infusor is oscillating around a transversal oscillation axis (12).

6. Infusion group according to claim 5, comprising guide means suitable to align the two male and female infusors during the translation of the mobile infusor from the capsule loading position to the infusion position.

7. Infusion group according to claim 6, wherein the support frame (2) comprises a pair of lateral containment plates (16) of the male and female infusors, and wherein said guide means comprise a guide slot (14) made in each of said lateral plates, the mobile infusor being provided with guide pins (18, 19) sliding in said slots.

8. Infusion group according to claim 7, wherein each guide slot (14) comprises an arched section (14a) ending, on the side facing the infusion position, with a rectilinear section (14b) parallel to the main axis (X) of the frame, the mobile infusor being provided , on each side, with a front guide pin (18) and a rear guide pin (19), in the capsule loading position, the mobile infusor having the front pin (18) engaged by the rectilinear section of the guide slot and the rear pin (19) positioned at the lower extremity of the arched section (14a) of said guide slot (14).

9. Infusion group according to claim 8, wherein said rear pin (19) coincides with the oscillation axis (12) of the mobile infusor.

10. Infusion group according to any of the previous claims, wherein the mobile infusor is translatable in a rearward capsule expulsion position away from the infusion position.

11. Infusion group according to claim 10, comprising return means (22) suitable to bring the mobile infusor back to the capsule loading position from the capsule expulsion position.

12. Infusion group according to any of the claims 8-11, wherein said return means comprise a pair of return springs (12), each fixed on one side to a respective lateral plate (16), and on the other to one of the guide pins (19) of the mobile infusor.
